# EUROPEAN PATENT APPLICATION

(11) **EP 4 524 143 A1**
(43) Date of publication of application: **19.03.2025**
(21) Application number: 23197745.5
(22) Date of filing: 15.09.2023
(51) Int. Cl.: C07F 5/06

(54) **EFFICIENT PREPERATION OF ORGANO ALUMNIUM CHLORIDE COMPOUNDS**

(71) Applicant: LANXESS Organometallics GmbH, 59192 Bergkamen (DE)
(72) Inventor: Holtrichter-Rößmann, Thorsten, 59227 Ahlen (DE); Liedtke, Claus Günter, 59368 Werne (DE)
(74) Representative: Deblon, Jörg-Stephan

(57) **Abstract**

The present invention relates to an efficient process for the manufacture of organoaluminum chlorides from dialkyl aluminum hydrides of various qualities.

## Description

The present invention relates to an efficient process for the manufacture of organoaluminum chlorides from dialkyl aluminum hydrides of various qualities.

Organo aluminum compounds in particular halogenated ones are generally known and widely applied for example in the production of polymers such as polyolefines, like ethylene homo- and copolymers or as (co)catalysts in olefine metathesis.

In Wiberg, Schmidt; Zeitung für Naturforschung, 6b, p. 460-461) the hydrogen chloride exchange of alan AlH₃ and aluminum trichloride is disclosed. However this document is silent about alkyl containing aluminum compounds.

Typically, organoaluminum chlorides are prepared by reactions of trialkyl aluminum compounds and aluminum trichloride or defined chloroaluminum compounds such as dialkyl aluminum chlorides or alkyl aluminum dichorides.

However the aforementioned procedures require the employment of trialkyl aluminum compounds which are at least for some alkyl substituents only difficult to prepare.

In view of the above there was therefore still a need to provide easily accessible process for the preparation of organo aluminum chlorides.

Therefore there is now provided a process for the preparation of compounds of formula (I)

R¹ₙAlCl₍₃₋ₙ₎ (I)

wherein
- R¹: denotes alkyl or cycloalkyl which are either not or once substituted by phenyl and
- n: is from 0.5 to 2.5, preferably from 0.8 to 1.2 or 1.4 to 1.6 or 1.8 to 2.2 , for example 1 or 1.5 or 2
the process comprising at least the step of reacting a compound of formula (II)

R¹₂AlH (II)

with aluminum trichloride.

The scope of the invention encompasses all combinations of substituent definitions, areas of preference or preferred embodiments, with one another, i.e., also any combinations between the particular areas and areas of preference.

Whenever used herein the terms "including", "for example" and "such as" are meant in the sense of "including but without being limited to" or "for example without limitation", respectively.

As used herein aluminum trichloride refers to water-free aluminum trichloride, wherein water-free denotes a water content of less than 1 wt.-%, preferably less than It is known to those in the art that the compounds of formulae (I) and (II) may be present in dimeric or oligomeric, preferably dimeric or trimeric structure with hydride or chloride as bridging ligands. These forms are also encompassed by general formulae (I) and (II)

For example, where n is 1.5 formula (I) includes compounds that include the following structure: 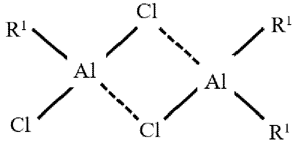 Exemplary dimeric structure of compound of formula (I) with n =1.5

As used herein, and unless specifically stated otherwise "alkyl" may be branched or unbranched.

As used herein, and unless specifically stated otherwise "cycloalkyl" may be cyclic either in part or as a whole.

Preferably, "alkyl" denotes C₂-C₁₈-alkyl, which either not or once substituted by phenyl, preferably not substituted, even more preferably C₂-C₈-alkyl which either not or once substituted by phenyl, preferably not substituted. The index at the carbon atoms indicates the number carbon atoms excluding the carbon atoms of optionally present phenyl substituents. Specific examples of C₂-C₈-alkyl are ethyl, n-propyl, isopropyl, n-butyl, sec.-butyl, isobutyl, tert-butyl, n-pentyl, n-hexyl, n-heptyl, n-octyl, isooctyl, n-decyl, n-dodecyl, whereby ethyl, isobutyl, n-butyl, sec. -butyl, n-hexyl, 2-ethylhexyl and n-octyl are preferred and isobutyl is even more preferred.

Preferably, "cycloalkyl" denotes C₃-C₁₈-cycloalkyl even more preferably C₅-C₁₈-cycloalkyl which either not or once substituted by phenyl, preferably not substituted. The index at the carbon atoms indicates the number carbon atoms excluding the carbon atoms of optionally present phenyl substituents. Specific examples of C₅-C₁₈-cycloalkyl are cyclopentyl, cyclohexyl, methylcyclohexyl, whereby cyclohexyl is preferred.

Preferred compounds of formula (I) are diethylaluminum chloride (DEAC) and ethylaluminumdichloride (EADC), ethyl aluminum sesquichloride (EASC), diisobutyl aluminum chloride (DIBAC) and isobutyl aluminum dichloride (IBADIC) and isobutyl aluminum sesquichloride and mixtures of the aforementioned.

Preferred compounds of formula (II) are di-isobutyl aluminum hydride (DIBAH), diethyl aluminum hydride.

The molar ratio of compounds of formula (II) and aluminum trichloride depends on the desired product of formula (I) to be prepared and typically is selected that for 1 mol of R¹ present in the desired compounds of formula (I) 0.25 to 0.4, preferably 0.3.

The compounds of formula (II) may be for example employed in form of pure substances with a purity of for example 98 wt.-% or more. However, it was found that lower purities, for example those of 80 wt% to less than 98 wt% are likewise suitable.

Typically, these qualities are obtained as reaction residues stemming from the preparation of dialkyl aluminum hydrides by reacting aluminum with alkenes and hydrogen in a manner known to those skilled in the art followed by distillation or filtration.

Such qualities may comprise (unreacted) aluminum, aluminum oxides, as well as iron, zirconium, titanium and oxides of iron, zirconium and titanium.

It was found that these components do not notably interfere with the reaction according to the invention.

The reaction of compounds of formula (II) and aluminum trichloride may be performed as neat substances or in the presence of a non-coordinating solvent.

As used herein the term "non-coordinating solvent" means that the solvent molecules do not contain oxygen, sulfur or nitrogen atoms. For example non-coordinating solvents include aliphatic hydrocarbon solvents such as pentanes, hexanes, heptanes, octanes, nonanes, decanes, undecanes, dodecanes, each of the aforementioned in any possible isomeric pure form or in isomeric mixtures, mineral oils or any mixture of the aforementioned aliphatic hydrocarbon solvents. Preferred non-coordinating solvents include n-pentane, iso-pentane, pentanes, n-hexane, iso-hexane, hexanes, n-heptane, iso-heptane, heptanes, whereby heptanes are preferred.

The process can either be performed batchwise or continuously, preference being given to batchwise performance.

The reaction times in batch processes and the residence time in continuous processes are for example from 30 seconds to 24 hours, preferably from 30 minutes to 12 hours.

The process according to the invention can be performed, for example, in any reactor allowing such kind of reactions, for example a tube reactor with mixing nozzle in case of continuous processes or a stirred tank for batch processes.

The process according to the invention is performed, for example, at temperatures of -20 to 150°C, preferably at temperatures of 0 to 130°C and even more preferred at temperatures of 15 to 125°C.

The reaction pressure is not very critical and can step 1) be 1000 hPa to 5 MPa, preferably from 900 hPa to 1 MPa, even more preferably at ambient pressure.

Without wanting to be bound by theory it is assumed that during the reaction aluminum hydride AlH₃ is formed which decomposes to form gaseous hydrogen and finely distributed aluminum.

To remove the latter and other (solid) impurities that might have formed during the reaction or were introduced already into the reaction with the reactants the inventive process may further comprise the further step of purifying the compounds of formula (I).

This task can be performed be any means known for those skilled in the art to separate solids or other impurities from the desired compounds of formula(I) by filtration, centrifugation or decanting and/or distillation, whereby distillation is preferred.

The compounds of formula (I) prepared according to the invention are particularly useful to be employed as catalysts or cocatalysts in oligomerization and polymerization reactions such as in the oligomerization and polymerization of olefins, preferably isobutene, butadiene or ethylene or propylene either with or without C₂-C₂₀ olefins as comonomers as well as in the metathesis of oligomers or polymers.

As used herein, "oligomers" shall mean compounds comprising from 2 to 8 structural (repeating) units derived from one or more olefins employed in an "oligomerization" reaction.

As used herein, "polymers" shall mean compounds comprising 9 or m0re, for example 9 to 500,000 structural (repeating) units derived from one or more olefins employed in a "polymerization" reaction.

Therefore one aspect or the present invention relates to metathesis, oligomerization and polymerization reactions, preferably the oligomerization or polymerization of olefins, more preferably oligomerization or polymerization of isobutene, butadiene, ethylene or propylene either with or without C₂-C₂₀ olefins as comonomers whereby the compounds of formula (I) prepared according to the invention are employed as (co)catalysts.

A major advantage of the present invention is that compounds of formula (I) can be prepared from various qualities of organo aluminum hydrides in a smooth and efficient reaction.

The following examples are intended to illustrate the invention, but without limiting it thereto.

### Experimental:

### General

### Analytical methods

### Sample preparation:

A suitable amount of sample was weighed into a flask and diluted with an inert solvent. The organo aluminum compounds were decomposed by addition of acetate buffer and a suitable amount of EDTA solution. The formation of the aluminum EDTA-complex and evaporation of the organic solvent were supported by heating on a heating plate.

### Determination of the aluminum content:

This procedure was applied to all organo aluminum compounds. During sample preparation a complex was formed of aluminum and excess EDTA. The excess of EDTA was back titrated with Zn²⁺ solution to determine the aluminum content.

### Determination of the chloride content:

This procedure is applicable to products containing chloride which was made available in ionic form by sample preparation. Chloride was titrated with silver nitrate solution in a potentiometric titration. Two independent determinations were performed. The absolute chloride content in the sample was calculated from the amount of silver nitrate consumed.

### Purity

Purity determination was performed by gas chromatography.

### Examples

All manipulations were carried out under protection gas using Schlenk techniques.

### 1) Preparation of isobutyl aluminum dichloride

A flask was charged with 34.40 g diisobutyl aluminum hydride (DIBAH, Purity min. 96 wt-% DIBAH) at 25°C. Then 21.30 g aluminium trichloride were added in one portion whereupon the inside temperature raised to 48°C. The temperature of the outside heating was raised to 30°C and the second amount of aluminium trichloride were added in one portion without observing any further temperature increase. The reaction mixture was heated to 80 °C and stirred at that temperature for 2 hours. After one hour at 80 °C a grey solid formed. The temperature of the outside heating was raised to 120°C, Finally, the reaction mixture was distilled at 10 mbar. A clear colorless liquid was obtained.

Yield: 65.3 g, (87 % of theory)

Analytical data: 17.80 m/m % Al, 46,34 m/m % Cl, 99,23 n/n % isobutane

### 2) Preparation of isobutyl aluminum dichloride

A flask was charged with 88.79 g diisobutyl aluminum hydride (91,4 % DIBAH content, total solid content of 10 % calculated on Al which corresponds to 8.6 wt-%) at 25 °C. Then 55.50 g aluminum trichloride were added in one portion whereupon the inside temperature raised to 34°C. The temperature of the outside heating was raised to 30°C and the second amount of aluminum trichloride were added in one portion without observing any further temperature increase. The reaction mixture was heated to 110 °C and stirred at that temperature for 2 hours. The temperature of the outside heating was raised to 120°C. 25 g high boiling saturated oil (Parol) were added and at 10 mbar the reaction mixture was distilled. A clear colorless liquid was isolated.

### Yield: 171.8 g, (87 % of theory)

Analytical data: 17.54 m/m % Al, 46,63 m/m % Cl, 99,91 n/n % isobutane

## Claims

1. A process for the preparation of compounds of formula (I)
R¹ₙAlCl₍₃₋ₙ₎ (I)
wherein
R¹ denotes alkyl or cycloalkyl which are either not or once substituted by phenyland
n is from 0.5 to 2.5, preferably 1 or 1.5 or 2
the process comprising at least the step of reacting a compound of formula (II)
R¹₂AlH (II)
with aluminum trichloride.

2. The process according to claim 1, wherein R¹ denotes C₂-C₁₈-alkyl, either not or once substituted by phenyl, more preferably C₂-C₈-alkyl which either not or once substituted by phenyl and even more preferably ethyl, n-propyl, isopropyl, n-butyl, sec.-butyl, isobutyl, tert-butyl, n-pentyl, n-hexyl, n-heptyl, n-octyl, isooctyl, n-decyl, n-dodecyl, whereby ethyl, isobutyl, n-butyl, sec. - butyl, n-hexyl, 2-ethylhexyl and n-octyl are yet even more preferred and isobutyl is most preferred.

3. The process according to claim 1, wherein the compounds of formula (I) are selected from diethylaluminum chloride (DEAC) and ethylaluminumdichloride (EADC), ethyl aluminum sesquichloride (EASC), diisobutyl aluminum chloride and isobutyl aluminum dichloride ....
3.The process according to claim 1, wherein the compounds of formula (I) are selected from the group consisting of diethylaluminum chloride (DEAC) and ethylaluminumdichloride (EADC), ethyl aluminum sesquichloride (EASC), diisobutyl aluminum chloride and isobutyl aluminum dichloride

4. The process according to claim 1, wherein the compounds of formula (II) are selected from the group consisting of di-isobutyl aluminum hydride (DIBAH) and diethyl aluminum hydride.

5. The process according to anyone of claims 1 to 4, wherein the molar ratio of compounds of formula (II) and aluminum trichloride is selected such that for 1 mol of R¹ present in the desired compounds of formula (I) 0.25 to 0.4, preferably 0.30 mol of aluminum trichloride are employed.

6. The process according to anyone of claims 1 to 5, wherein the purity of compounds of formula (II) is 80 % or more, preferably either 98 wt.-% or more or from 80 wt% to less than 98 wt%.

7. The process according to anyone of claims 1 to 6, wherein the purity of compounds of formula (II) is from 80 wt% to less than 98 wt% and represent reaction residues stemming from the preparation of dialkyl aluminum hydrides.

8. The process according to anyone of claims 1 to 7, wherein the reaction of compounds of formula (II) and aluminum trichloride may be performed as neat substances or in the presence of a non-coordinating solvent.

9. The process according to anyone of claims 1 to 8, wherein the process is performed batchwise or continuously, preference being given to batchwise performance.

10. The process according to anyone of claims 1 to 9, wherein the reaction temperature is -20 to 150°C, preferably 0 to 130°C and even more preferably 15 to 125°C.

11. The process according to anyone of claims 1 to 10, wherein the process comprises as a further step purifying the compounds of formula (I), preferably by filtration, centrifugation or decanting and/or distillation, whereby distillation is even more preferred.

12. A process for the metathesis of oligomers or polymers or the oligomerization and polymerization of olefins wherein the compounds of formula (I) prepared according to the invention are employed as catalysts or cocatalysts.
